# EUROPEAN PATENT APPLICATION

(11) **EP 4 481 900 A1**
(43) Date of publication of application: **25.12.2024**
(21) Application number: 22933173.1
(22) Date of filing: 20.12.2022
(51) Int. Cl.: H01M 50/103

(54) **BATTERY SHELL, BATTERY AND ELECTRONIC APPARATUS**

(30) Priority: 22.03.2022 CN 202210282984
(71) Applicant: Ningde Amperex Technology Limited, Ningde, Fujian 352100 (CN)
(72) Inventor: LIU, Ning, Ningde, Fujian 352100 (CN); YAN, Kun, Ningde, Fujian 352100 (CN); ZHAO, Wei, Ningde, Fujian 352100 (CN); HE, Ping, Ningde, Fujian 352100 (CN)
(74) Representative: Icosa
(86) International application number: PCT/CN2022/140451
(87) International publication number: WO 2023/179124

(57) **Abstract**

This application relates to the technical field of batteries, and in particular, discloses a battery shell, a battery, and an electronic device. The battery shell includes a first housing. The first housing is configured to be formed by winding a sheet around a first axis. The sheet includes a first end portion and a second end portion. The first end portion and the second end portion are stacked along a first direction. The first direction is perpendicular to the first axis. The first housing includes a first sidewall. The first sidewall includes a first flat portion, a first bent portion, and the first end portion. The first sidewall further includes a second flat portion and the second end portion. A wall face of the first flat portion away from the first axis is a first wall face. A wall face of the second flat portion away from the first axis is a second wall face. As viewed along a thickness direction perpendicular to the second flat portion, a distance between the first wall face and the second wall face is less than a thickness of the second flat portion. This application reduces the space that the first flat portion and the second flat portion need to occupy, and increases the energy density of the battery.

## Description

### CROSS-REFERENCE TO RELATED APPLICATIONS

This application claims priority to Chinese Patent Application No. 202210282984.1, filed with the Chinese Patent Office on March 22, 2022 and entitled "BATTERY SHELL, BATTERY, AND ELECTRONIC DEVICE", which is incorporated herein by reference in its entirety.

### TECHNICAL FIELD

This application relates to the technical field of batteries, and in particular, to a battery shell, a battery, and an electronic device.

### BACKGROUND

An existing battery shell is either relatively thick with a relatively low energy density of the battery, or relatively thin with deficient structural strength.

### SUMMARY

A main objective of some embodiments of this application is to provide a battery shell, a battery, and an electronic device to increase an energy density of the battery and maintain relatively high structural strength of the battery concurrently.

To achieve the foregoing objective, a technical solution of this application is to provide a battery shell. The battery shell includes a first housing. The first housing is configured to be formed by winding a sheet around a first axis. The sheet includes a first end portion and a second end portion, and the first end portion and the second end portion are provided along a circumferential direction around the first axis. The first end portion and the second end portion are stacked along a first direction. The first direction is perpendicular to the first axis. The first housing includes a first sidewall. Along a first circumferential direction around the first axis, the first sidewall includes a first flat portion, a first bent portion, and the first end portion connected in sequence. Along a second circumferential direction around the first axis, the first sidewall further includes a second flat portion and the second end portion connected in sequence. The first circumferential direction is opposite to the second circumferential direction. A wall face of the first flat portion, which is away from the first axis, is a first wall face. A wall face of the second flat portion, which is away from the first axis, is a second wall face. As viewed along a thickness direction perpendicular to the second flat portion, a distance between the first wall face and the second wall face along the thickness direction of the second flat portion is less than a thickness of the second flat portion. In the foregoing solution, on the one hand, the welding between the first end portion and the second end portion is facilitated. On the other hand, compared with a structure in which the first end portion and the second end portion are welded after being arranged apart along the circumferential direction around the first axis, the foregoing solution increases the structural strength after the two end portions are welded.

In some embodiments, the first wall face is parallel to the second wall face. In the foregoing solution, the first flat portion is aligned with the second flat portion, thereby further improving the space-efficiency inside the battery shell and increasing the energy density of the battery accommodated in the battery shell.

In some embodiments, along the thickness direction of the second flat portion, a vertical distance between the first wall face and an end face of the first end portion, which is away from the first axis, is greater than or equal to the thickness of the second flat portion. In the foregoing solution, the thickness of the second end portion along the first direction is increased, and the reliability of welding between the first end portion and the second end portion is enhanced.

In some embodiments, an angle between an end face of the first end portion and an end face of the first bent portion is greater than 90° and less than 180°, the two end faces both being away from the first axis; and/or an angle between the first wall face and the end face of the first bent portion, which is away from the first axis, is greater than 90° and less than 180°. The foregoing solution reduces the space that the first bent portion needs to occupy, and increases the energy density of the battery.

In some embodiments, at least one of the following conditions is satisfied: a) a thickness σ of the sheet satisfies 0.035 mm ≤ σ ≤ 3.0 mm, and therefore, in this solution, the sheet possesses relatively high structural strength and relatively high flexibility performance; b) an overlap region exists between the first end portion and the second end portion along the first direction, a dimension L of the overlap region along a second direction is greater than or equal to 0.1 mm, and the second direction is perpendicular to the first axis and perpendicular to the first direction, and therefore, in this solution, the reliability of welding between the first end portion and the second end portion is enhanced; and c) the sheet is a metal material, and the material of the sheet includes at least one of Ni, Ti, Ag, Au, Pt, Fe, Co, Cr, Mo, In, Zn, stainless steel or an alloy thereof, or, Al or an alloy thereof. In the foregoing solution, the welding between the first end portion and the second end portion is facilitated, and the battery shell is of relatively high structural strength at the same time.

In some embodiments, along the circumferential direction around the first axis, a dimension of the first sidewall is less than or equal to a dimension of any other sidewall of the first housing. The foregoing solution reduces the space that the first sidewall needs to occupy, and relatively increases the energy density of the battery.

In some embodiments, a wall face of the second end portion is parallel to the wall face of the second flat portion, the two wall faces both being away from the first axis; and a wall face of the second end portion is parallel to a flat face of the second flat portion, the wall face and the flat face both being oriented toward the first axis. In the foregoing solution, the second flat portion and the second end portion may be an integral flat plate, without a need to further process the second end portion, thereby improving the processing efficiency of the first housing.

In some embodiments, along a second direction, a dimension of the first flat portion is greater than a dimension of the second flat portion, and the second direction is perpendicular to the first direction and perpendicular to the first axis. The foregoing solution makes the first end portion closer to a corner between the first sidewall and other adjacent sidewalls, reduces the space that the first end portion needs to occupy in the effective space at a middle part of the first housing along the second direction, and therefore, increases the energy density of the battery.

In some embodiments, the first housing includes the first sidewall, a second sidewall, a third sidewall, and a fourth sidewall. The first sidewall, the second sidewall, the third sidewall, and the fourth sidewall are sequentially provided around the first axis. The first sidewall is opposite to the third sidewall, and the second sidewall is opposite to the fourth sidewall. A first chamfer is formed between the first sidewall and the second sidewall, and a second chamfer is formed between the first sidewall and the fourth sidewall. A third chamfer is formed between the third sidewall and the second sidewall, and a fourth chamfer is formed between the third sidewall and the fourth sidewall. Chamfer radii of the first chamfer, the second chamfer, the third chamfer, and the fourth chamfer are all greater than or equal to 0.1 mm. On the one hand, the foregoing solution alleviates the tearing at a bend part when the sheet is bent. On the other hand, the foregoing solution also reduces the difficulty of bending and reduces the processing cost.

In some embodiments, the first housing includes a first port and a second port. The first port and the second port are provided opposite to each other along the first axis. The battery shell further includes a second housing. The second housing is connected to the first housing and covers the first port. A protruding portion is disposed on a wall face connecting the second housing and the first housing. The protruding portion extends into the first housing. The protruding portion includes an annular peripheral wall arranged around the first axis. The annular peripheral wall includes a first flat wall. The first housing includes a second flat wall opposite to the first flat wall. A distance between the first flat wall and the second flat wall gradually increases along a third direction. The third direction is parallel to the first axis and directed to a side close to the first housing from a side of the second housing, the side being away from the first housing. An angle α between the first flat wall and the second flat wall satisfies: 0.5° ≤ α ≤ 15°. In the foregoing solution, in a process of fitting the first housing and the second housing together, the protruding portion serves a guiding function, and facilitates the protruding portion to extend into the first housing.

In some embodiments, along a direction parallel to the first axis, a dimension of the protruding portion is greater than or equal to 0.3 mm. On the one hand, the foregoing solution increases intensity of the sealing performed by the second housing for the first port of the first housing. On the other hand, the foregoing solution facilitates the welding between the second housing and the first housing, provides support for the welded part, and improves stability of welding.

In some embodiments, a wall face of the first end portion, which is away from the first axis, fits snugly with a wall face of the second end portion, which is oriented toward the first axis. The foregoing solution makes the shape of the battery more regular and reduces the space that the battery needs to occupy.

A second aspect of this application further provides a battery. The battery includes any one of the battery shells disclosed above and an electrode assembly. The electrode assembly is disposed in the battery shell.

A third aspect of this application further provides an electronic device. The electronic device includes the battery.

In the battery shell provided in this application, the first housing is formed by winding a sheet around the first axis. The number of welds on the first housing is relatively small, without a need to increase the thickness of the first housing for the purpose of meeting the welding strength requirement. The thickness of the first housing can be reduced. Therefore, the battery accommodated in such a battery shell achieves a higher energy density. In addition, the first end portion and the second end portion are stacked. On the one hand, the welding between the first end portion and the second end portion is facilitated. On the other hand, compared with a structure in which the first end portion and the second end portion are welded after being arranged apart along the circumferential direction around the first axis, the technical solution hereof increases the structural strength after the two end portions are welded. Especially, in this application, as viewed along a thickness direction perpendicular to the second flat portion, a distance between the first wall face and the second wall face along the thickness direction of the second flat portion is less than a thickness of the second flat portion. In this way, along the thickness direction of the second flat portion, the space that the first flat portion and the second flat portion need to occupy is smaller, thereby further increasing the energy density of the battery accommodated in the battery shell.

### BRIEF DESCRIPTION OF DRAWINGS

To describe the technical solutions of the embodiments of this application more clearly, the following outlines the drawings used in the embodiments of this application. Evidently, the drawings outlined below are merely a part of embodiments of this application. A person of ordinary skill in the art may derive other drawings from the outlined drawings without making any creative efforts.
FIG. 1 is a three-dimensional schematic diagram of a first housing according to a first embodiment of this application;
FIG. 2 is a close-up view of a part A shown in FIG. 1;
FIG. 3 is a schematic side view of a first housing viewed along a direction Z according to a first embodiment of this application;
FIG. 4 is a schematic side view of a first housing viewed along a direction Z according to a second embodiment of this application;
FIG. 5 is a three-dimensional schematic diagram of a battery shell according to a first embodiment of this application;
FIG. 6 is a schematic exploded view of a battery according to a first embodiment of this application;
FIG. 7 is a schematic sectional view of a battery according to a first embodiment of this application; and
FIG. 8 is a close-up view of a part B shown in FIG. 7.

### DETAILED DESCRIPTION OF EMBODIMENTS

For ease of understanding this application, the following describes this application in more detail with reference to drawings and specific embodiments. It is hereby noted that an element referred to herein as being "fixed to" another element may be directly disposed on the other element, or may be fixed to the other element with one or more elements in between. An element referred to herein as "connected to" another element may be connected to the other element directly or with one or more elements in between. The terms "vertical", "horizontal", "left", "right", and other similar expressions used herein are merely for ease of description.

Unless otherwise defined, all technical and scientific terms used herein bear the same meanings as what is normally understood by a person skilled in the technical field of this application. The terms used in the specification of this application are merely intended to describe specific embodiments but not to limit this application. The term "and/or" used herein is intended to include any and all combinations of one or more relevant items recited.

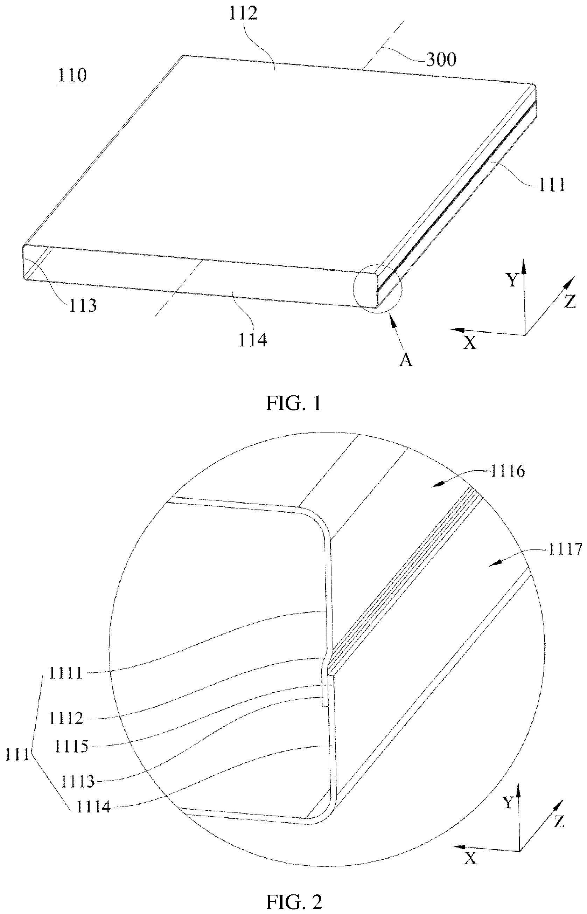

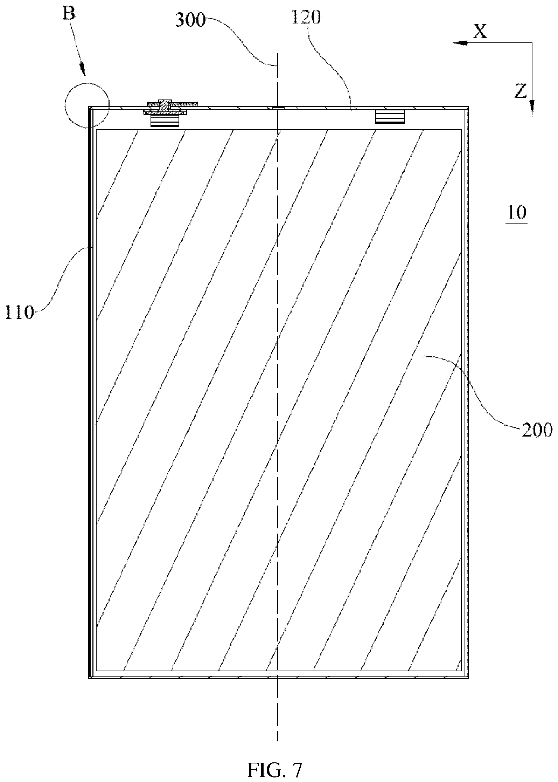

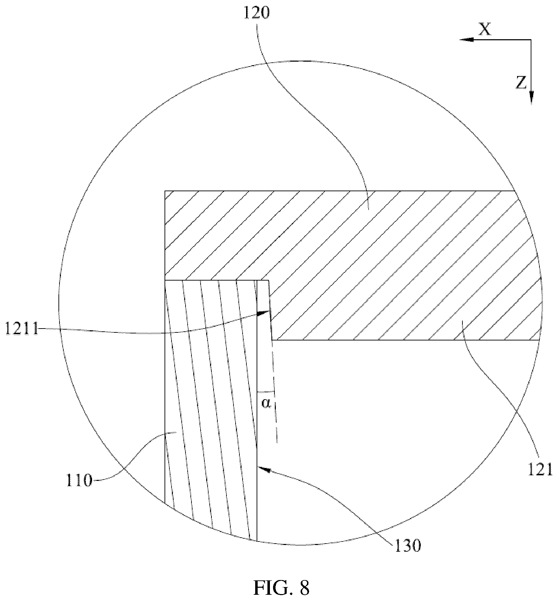

Referring to FIG. 1 to FIG. 8, an embodiment of this application provides a battery shell 100. The battery shell 100 is applicable to a battery 10. The battery shell 100 includes a first housing 110 and a second housing 120. The first housing 110 and the second housing 120 jointly define an accommodation cavity configured to accommodate an electrode assembly 200 of the battery 10.

The first housing 110 is configured to be formed by winding a sheet around a first axis 300. The sheet includes a first end portion 1113 and a second end portion 1115. The first end portion 1113 and the second end portion 1115 are provided along a circumferential direction around the first axis 300. The first end portion 1113 and the second end portion 1115 are stacked along a first direction X. The first direction X is perpendicular to the first axis 300. The first end portion 1113 may be located on a side of the second end portion 1115, the side being away from the first axis 300. Alternatively, the first end portion 1113 may be located on a side of the second end portion 1115, the side being close to the first axis 300. As an example used in this embodiment, the first end portion 1113 is located on the side of the second end portion 1115, the side being close to the first axis 300. In other words, a wall face of the first end portion 1113, which is away from the first axis 300, fits snugly with a wall face of the second end portion 1115, which is oriented toward the first axis 300.

For ease of description, a second direction Y and a third direction Z are defined below with reference to the first direction X and the first axis 300. The second direction Y is perpendicular to the first direction X and the first axis 300. The third direction Z is perpendicular to the first direction X and the second direction Y

Along a circumferential direction around the first axis 300, the first housing 110 may include a plurality of sidewalls. Each sidewall may be a flat wall or a curved wall. In the following embodiment, one of sidewalls of the first housing 110 (that is, a first sidewall 111 to be described below) will be described. Along a first circumferential direction around the first axis 300, the first housing 110 includes a first sidewall 111. The first sidewall 111 includes a first end portion 1113 and a second end portion 1115. Specifically, along the first circumferential direction around the first axis 300, the first sidewall 111 includes a first flat portion 1111, a first bent portion 1112, and the first end portion 1113 connected in sequence. Along a second circumferential direction around the first axis 300 (the second circumferential direction is opposite to the first circumferential direction), the first sidewall 111 further includes a second flat portion 1114 and the second end portion 1115 connected in sequence. In other words, the first sidewall 111 includes two parts. The two parts are two end parts of the sheet respectively.

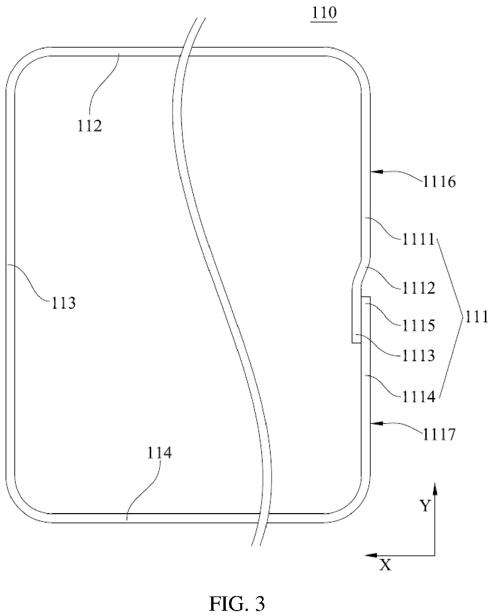

A wall face of the first flat portion 1111, which is away from the first axis 300, is a first wall face 1116. A wall face of the second flat portion 1114, which is away from the first axis 300, is a second wall face 1117. In this embodiment, as viewed along a thickness direction perpendicular to the second flat portion 1114, a distance between the first wall face 1116 and the second wall face 1117 along the thickness direction of the second flat portion 1114 is less than a thickness of the second flat portion 1114 (in a specific embodiment, the thickness direction of the second flat portion 1114 is parallel to the first direction X). When the thickness direction of the second flat portion 1114 is parallel to the first direction X, as viewed from a viewing angle in FIG. 3, the distance between the first wall face 1116 and the second wall face 1117 along the first direction X is less than the thickness of the second flat portion 1114.

In this application, "the distance between the first wall face 1116 and the second wall face 1117" means a distance between any position on the first wall face 1116 and any position on the second wall face 1117 along the thickness direction of the second flat portion 1114. When the first wall face 1116 is parallel to the second wall face 1117, distances between any position on the first wall face 1116 and any position on the second wall face 1117 along the thickness direction of the second flat portion 1114 are all equal. When the first wall face 1116 is not parallel to the second wall face 1117, a maximum distance between the first wall face 1116 and the second wall face 1117 along the thickness direction of the second flat portion 1114 is less than the thickness of the second flat portion 1114.

In the battery shell 100 according to this embodiment of this application, the first housing 110 is formed by winding a sheet around the first axis 300. The number of welds on the first housing 110 is relatively small, without a need to increase the thickness of the first housing 110 for the purpose of meeting the welding strength requirement. The thickness of the first housing 110 can be reduced. Therefore, the battery 10 accommodated in such a battery shell 100 achieves a higher energy density. In addition, the first end portion 1113 and the second end portion 1115 are stacked. On the one hand, the welding between the first end portion and the second end portion is facilitated. On the other hand, compared with a structure in which the first end portion 1113 and the second end portion 1115 are welded after being arranged apart along the circumferential direction around the first axis 300, the technical solution hereof increases the structural strength after the two end portions are welded. Especially, in this application, as viewed along a thickness direction perpendicular to the second flat portion 1114, a distance between the first wall face 1116 and the second wall face 1117 along the thickness direction of the second flat portion 1114 is less than the thickness of the second flat portion 1114. In this way, along the thickness direction of the second flat portion 1114, the space that the first flat portion 1111 and the second flat portion 1114 need to occupy is smaller, thereby further increasing the energy density of the battery 10 accommodated in the battery shell 100.

In some embodiments, the first wall face 1116 is arranged parallel to the second wall face 1117. Further, the first wall face 1116 is parallel to the second wall face 1117, which means that the first wall face 1116 and the second wall 1117 are in the same plane. In this solution, the first flat portion 1111 is aligned with the second flat portion 1114, thereby further improving the space-efficiency inside the battery shell 100 and increasing the energy density of the battery 10 accommodated in the battery shell 100.

In some embodiments, along the thickness direction of the second flat portion 1114, a vertical distance between the first wall face 1116 and an end face of the first end portion 1113, which is away from the first axis 300, is greater than or equal to the thickness of the second flat portion 1114. In this way, the thickness of the second end portion 1115 along the first direction X is increased, and the reliability of welding between the first end portion 1113 and the second end portion 1115 is enhanced.

In some embodiments, a wall face of the second end portion 1115 is parallel to the wall face of the second flat portion 1114, the two wall faces both being away from the first axis 300; and a wall face of the second end portion 1115 is parallel to a flat face of the second flat portion 1114, the wall face and the flat face both being oriented toward the first axis 300. In the foregoing solution, the second flat portion 1114 and the second end portion 1115 may be an integral flat plate, without a need to further process the second end portion 1115, thereby improving the processing efficiency of the first housing 110.

In some embodiments, an angle between an end face of the first end portion 1113 and an end face of the first bent portion 1112 is greater than 90° and less than 180°, the two end faces both being away from the first axis 300; and/or an angle between the first wall face 1116 and the end face of the first bent portion 1112, which is away from the first axis 300, is greater than 90° and less than 180°. This solution reduces the space that the first bent portion 1112 needs to occupy, and increases the energy density of the battery 10.

In some embodiments, the battery shell 100 satisfies at least one of the following conditions:

a) A thickness σ of the sheet satisfies 0.035 mm ≤ σ ≤ 3.0 mm. That is, the thicknesses of all parts of the sheet fall within the range of 0.035 mm to 3.0 mm. For example, the thicknesses of different parts of the sheet may be 0.035 mm, 0.05 mm, 0.1 mm, 0.5 mm, 1 mm, 2 mm, 3 mm, or the like. Therefore, in this solution, the sheet possesses relatively high structural strength and relatively high flexibility performance;

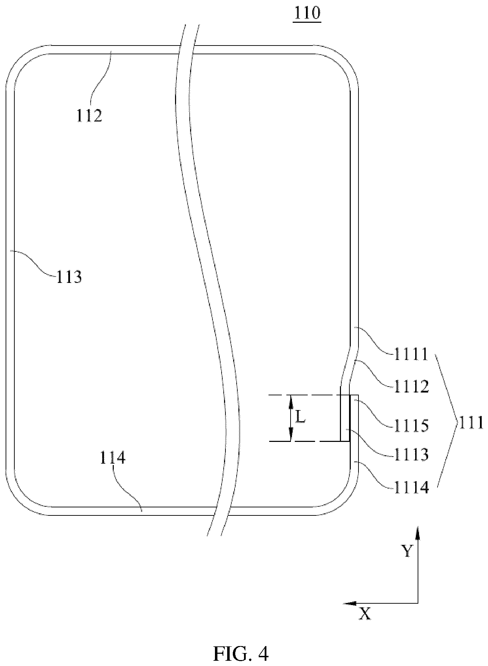

b) As shown in FIG. 4, an overlap region exists between the first end portion 1113 and the second end portion 1115 along the first direction X. A dimension L of the overlap region along a second direction Y is greater than or equal to 0.1 mm. Specifically, L may be 0.1 mm, 0.2 mm, 0.3 mm, 0.4 mm, 0.5 mm, or the like. When the dimension L of the overlap region is greater than or equal to 0.1 mm, the reliability of welding between the first end portion 1113 and the second end portion 1115 is enhanced; and

c) The sheet is a metal material, and the material of the sheet includes at least one of Ni, Ti, Ag, Au, Pt, Fe, Co, Cr, Mo, In, Zn, stainless steel or an alloy thereof, or, Al or an alloy thereof. In the foregoing solution, the welding between the first end portion 1113 and the second end portion 1115 is facilitated, and the battery shell 100 is of relatively high structural strength at the same time.

The applicant hereof considers that, along the first direction X, the first sidewall 111 includes at least a total thickness of the second flat portion 1114 and the first end portion 1113 in aggregate, and therefore, the overall thickness of the first sidewall 111 is higher than the thickness of any other sidewall of the first housing 110. Therefore, for the battery 10, the smaller the dimension of the first sidewall 111 in comparison with the first housing 110, the higher the energy density of the battery 10. In view of this, in some embodiments, along the circumferential direction around the first axis 300, the dimension of the first sidewall 111 is less than or equal to the dimension of any other sidewall of the first housing 110. This solution reduces the space that the first sidewall 111 needs to occupy, and relatively increases the energy density of the battery 10. As an example, when the first housing 110 is rectangular and includes four sidewalls, the first sidewall 111 may be a sidewall at a short side of the first housing 110. For example, in the first housing 110 shown in FIG. 1, the first housing 110 includes four sidewalls: a first sidewall 111, a second sidewall 112, a third sidewall 113, and a fourth sidewall 114. Along the circumferential direction around the first axis 300, the dimension of the first sidewall 111 is identical to the dimension of the third sidewall 113, and the dimension of the second sidewall 112 is identical to the dimension of the fourth sidewall 114. In addition, the dimension of the first sidewall 111 is smaller than the dimension of the second sidewall 112.

Referring to FIG. 4, in some embodiments, along the second direction Y, the dimension of the first flat portion 1111 is greater than the dimension of the second flat portion 1114. This solution makes the first end portion 1113 closer to a corner between the first sidewall 111 and other adjacent sidewalls, reduces the space that the first end portion 1113 needs to occupy in the effective space at a middle part of the first housing 110 along the second direction Y, and therefore, increases the energy density of the battery 10. For example, when the electrode assembly 200 in the battery 10 is a jelly-roll electrode assembly 200, a winding axis of the electrode assembly 200 may be arranged parallel to the first axis 300 after the electrode assembly 200 is placed into the first housing 110. Because the electrode assembly 200 includes a bent part, a void exists between the electrode assembly 200 and a corner between the first sidewall 111 and the second sidewall 112. Placing the first end portion 1113 in the position of the void makes the first end portion 1113 occupy less arrangement space of the electrode assembly 200, thereby increasing the energy density of the battery 10.

In some embodiments, the first housing 110 includes a first sidewall 111, a second sidewall 112, a third sidewall 113, and a fourth sidewall 114. The first sidewall 111, the second sidewall 112, the third sidewall 113, and the fourth sidewall 114 are sequentially provided around the first axis 300. The first sidewall 111 is opposite to the third sidewall 113, and the second sidewall 112 is opposite to the fourth sidewall 114. A first chamfer is formed between the first sidewall 111 and the second sidewall 112, and a second chamfer is formed between the first sidewall and the fourth sidewall 114. A third chamfer is formed between the third sidewall 113 and the second sidewall 112, and a fourth chamfer is formed between the third sidewall and the fourth sidewall 114. Chamfer radii of the first chamfer, the second chamfer, the third chamfer, and the fourth chamfer are all greater than or equal to 0.1 mm. On the one hand, this solution alleviates the tearing at a bend part when the sheet is bent. On the other hand, this solution also reduces the difficulty of bending and reduces the processing cost.

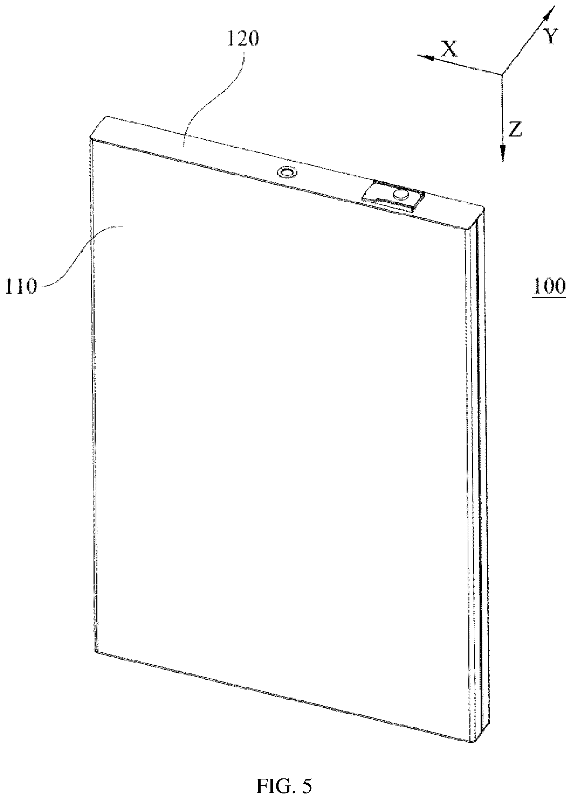

Referring to FIG. 5 to FIG. 8, in some embodiments, the first housing 110 includes a first port 115 and a second port. The first port 115 and the second port are provided opposite to each other along the first axis 300. The battery shell 100 further includes a second housing 120. The second housing 120 is connected to the first housing 110 and covers the first port 115 of the first housing 110. A protruding portion 121 is disposed on a wall face connecting the second housing 120 and the first housing 110. The protruding portion 121 extends into the first housing 110. The protruding portion 121 includes an annular peripheral wall arranged around the first axis 300. The annular peripheral wall may be formed by a plurality of wall faces. In this embodiment, the annular peripheral wall is rectangularly annular, and includes four flat walls that close in to form the peripheral wall (joints between the four flat walls may be curved faces that intersect).

The annular peripheral wall includes a first flat wall 1211. The first housing 110 includes a second flat wall 130 opposite to the first flat wall 1211. A distance between the first flat wall 1211 and the second flat wall 130 gradually increases along a third direction Z. The third direction Z is parallel to the first axis 300 and directed to a side close to the first housing 110 from a side of the second housing 120, the side being away from the first housing 110. Specifically, an angle α between the first flat wall 1211 and the second flat wall 130 satisfies: 0.5° ≤ α ≤ 15°. For example, α may be 0.5°, 1°, 3°, 6°, 9°, 12°, 15°, or the like. In a process of fitting the first housing 110 and the second housing 120 together, the protruding portion 121 serves a guiding function, and facilitates the protruding portion 121 to extend into the first housing 110.

In some embodiments, along a direction parallel to the first axis 300, a dimension of the protruding portion 121 is greater than or equal to 0.3 mm. On the one hand, the foregoing solution increases intensity of the sealing performed by the second housing 120 for the first port 115 of the first housing 110. On the other hand, the foregoing solution facilitates the welding between the second housing 120 and the first housing 110, provides support for the welded part, and improves stability of welding.

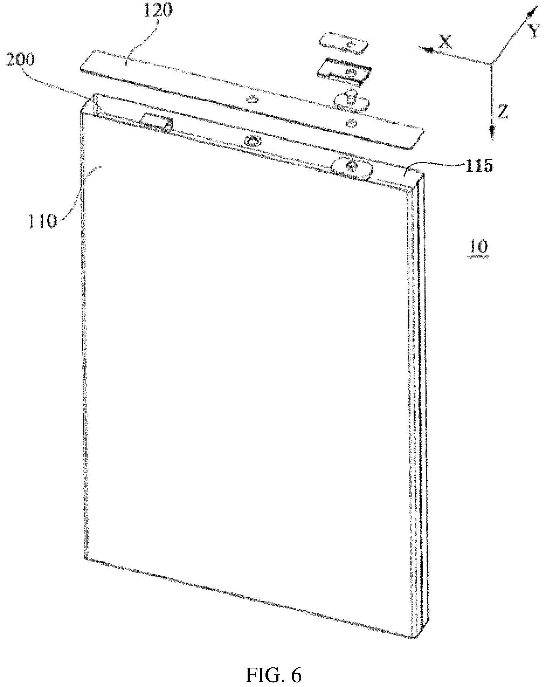

Referring to FIG. 6 to FIG. 8, a second aspect of this application further provides a battery 10. The battery 10 includes any one of the battery shells 100 disclosed above and an electrode assembly 200. The electrode assembly 200 is disposed in the battery shell 100. Specifically, the electrode assembly 200 may be a jelly-roll electrode assembly 200 or a stacked electrode assembly 200.

A third aspect of this application further provides an electronic device. The electronic device includes the battery 10 according to this application. The electronic device according to this application is not particularly limited, and may be any electronic device known in the prior art. For example, the electronic device includes, but is not limited to, a notebook computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, lighting appliance, toy, game console, watch, electric tool, flashlight, camera, large household battery, lithium-ion capacitor, sodium-ion capacitor, and the like.

It is hereby noted that although preferred embodiments of this application have been given in the specification and drawings of this application, this application may be implemented in many different forms, without being limited to the embodiments described herein. The embodiments are not intended to limit the content of this application, but merely to facilitate thorough and comprehensive understanding of the content disclosed herein. In addition, all kinds of embodiments that are not enumerated above but are derived by further combination of the foregoing technical features still fall within the scope covered by this application. Further, all improvements and variations, which may be made by a person of ordinary skill in the art based on the foregoing description, still fall within the protection scope of the claims appended hereto.

## Claims

1. A battery shell, **characterized in that** the battery shell comprises a first housing, the first housing is configured to be formed by winding a sheet around a first axis, the sheet comprises a first end portion and a second end portion, the first end portion and the second end portion are provided along a circumferential direction around the first axis, the first end portion and the second end portion are stacked along a first direction, and the first direction is perpendicular to the first axis;
the first housing comprises a first sidewall, and, along a first circumferential direction around the first axis, the first sidewall comprises a first flat portion, a first bent portion, and the first end portion connected in sequence; along a second circumferential direction around the first axis, the first sidewall further comprises a second flat portion and the second end portion connected in sequence; and the first circumferential direction is opposite to the second circumferential direction, wherein
a wall face of the first flat portion away from the first axis is a first wall face, a wall face of the second flat portion away from the first axis is a second wall face, and, as viewed along a thickness direction perpendicular to the second flat portion, a distance between the first wall face and the second wall face along the thickness direction of the second flat portion is less than a thickness of the second flat portion.

2. The battery shell according to claim 1, **characterized in that**
the first wall face is parallel to the second wall face.

3. The battery shell according to claim 1, **characterized in that**
along the thickness direction of the second flat portion, a vertical distance between the first wall face and an end face of the first end portion away from the first axis is greater than or equal to the thickness of the second flat portion.

4. The battery shell according to claim 1, **characterized in that**
an angle between an end face of the first end portion and an end face of the first bent portion is greater than 90° and less than 180°, the two end faces both being away from the first axis;
and/or,
an angle between the first wall face and the end face of the first bent portion away from the first axis is greater than 90° and less than 180°.

5. The battery shell according to claim 1, **characterized in that** at least one of the following conditions is satisfied:
a) a thickness σ of the sheet satisfies 0.035 mm ≤ σ ≤ 3.0 mm;
b) an overlap region exists between the first end portion and the second end portion along the first direction, a dimension L of the overlap region along a second direction is greater than or equal to 0.1 mm, and the second direction is perpendicular to the first axis and perpendicular to the first direction; and
c) the sheet is a metal material, and the material of the sheet comprises at least one of Ni, Ti, Ag, Au, Pt, Fe, Co, Cr, Mo, In, Zn, stainless steel or an alloy thereof, or, Al or an alloy thereof.

6. The battery shell according to claim 1, **characterized in that**
along the circumferential direction around the first axis, a dimension of the first sidewall is less than or equal to a dimension of any other sidewall of the first housing.

7. The battery shell according to claim 1, **characterized in that**
a wall face of the second end portion is parallel to the wall face of the second flat portion, the two wall faces both being away from the first axis; and a wall face of the second end portion is parallel to a flat face of the second flat portion, the wall face and the flat face both being oriented toward the first axis.

8. The battery shell according to claim 7, **characterized in that**
along a second direction, a dimension of the first flat portion is greater than a dimension of the second flat portion, and the second direction is perpendicular to the first direction and perpendicular to the first axis.

9. The battery shell according to claim 1, **characterized in that**
the first housing comprises the first sidewall, a second sidewall, a third sidewall, and a fourth sidewall sequentially distributed around the first axis, the first sidewall is opposite to the third sidewall, the second sidewall is opposite to the fourth sidewall, a first chamfer is formed between the first sidewall and the second sidewall, a second chamfer is formed between the first sidewall and the fourth sidewall, a third chamfer is formed between the third sidewall and the second sidewall, a fourth chamfer is formed between the third sidewall and the fourth sidewall, and chamfer radii of the first chamfer, the second chamfer, the third chamfer, and the fourth chamfer are all greater than or equal to 0.1 mm.

10. The battery shell according to claim 1, **characterized in that**
the first housing comprises a first port and a second port distributed opposite to each other along the first axis, the battery shell further comprises a second housing, and the second housing is connected to the first housing and covers the first port;
a protruding portion is disposed on a wall face connecting the second housing and the first housing, the protruding portion extends into the first housing, the protruding portion comprises an annular peripheral wall arranged around the first axis, the annular peripheral wall comprises a first flat wall, and the first housing comprises a second flat wall opposite to the first flat wall;
a distance between the first flat wall and the second flat wall gradually increases along a third direction, the third direction is parallel to the first axis and directed to a side close to the first housing from a side of the second housing, the side being away from the first housing; and
an angle α between the first flat wall and the second flat wall satisfies: 0.5° ≤ α ≤ 15°.

11. The battery shell according to claim 10, **characterized in that**
along a direction parallel to the first axis, a dimension of the protruding portion is greater than or equal to 0.3 mm.

12. The battery shell according to claim 1, **characterized in that**
a wall face of the first end portion away from the first axis fits snugly with a wall face of the second end portion oriented toward the first axis.

13. A battery, **characterized in that** the battery comprises:
the battery shell according to any one of claims 1 to 12; and
an electrode assembly, disposed in the battery shell.

14. An electronic device, **characterized in that** the electronic device comprises the battery according to claim 13.
